# EUROPEAN PATENT SPECIFICATION

(11) **EP 0 499 081 B1**
(45) Date of publication and mention of the grant of the patent: **22.11.1995**
(21) Application number: 92101279.5
(22) Date of filing: 27.01.1992
(51) Int. Cl.: B60Q 1/30

(54) **Stop light for vehicle**
Bremsleuchte für Fahrzeuge
Feux stop pour véhicule

(30) Priority: 15.02.1991 JP 6361/91
(43) Date of publication of application: 19.08.1992
(73) Proprietor: YAZAKI CORPORATION, Minato-ku Tokyo 108 (JP)
(72) Inventor: Iino, Tadashi, Susono-shi, Shizuoka-ken (JP)
(74) Representative: Füchsle, Klaus, Dipl.-Ing.

(56) References cited:
- US-A- 4 791 534
- US-A- 4 916 592

## Description

The present invention relates to a stop light arrangement for a vehicle having a compartment, a rear view mirror, a rear window and a brake, the arrangement intended for central mounting in the vicinity of the top edge of the rear window for flashing in synchronism with the brake and the arrangement comprising:
a light source arranged in a casing adapted to fit within a wall of the compartment; and
a prism arranged relative to said light source such that light from said light source is directed rearward of the vehicle through said prism.

Such an arrangement is described in US-A-4 791 534. This document forms the preamble of claim 1.

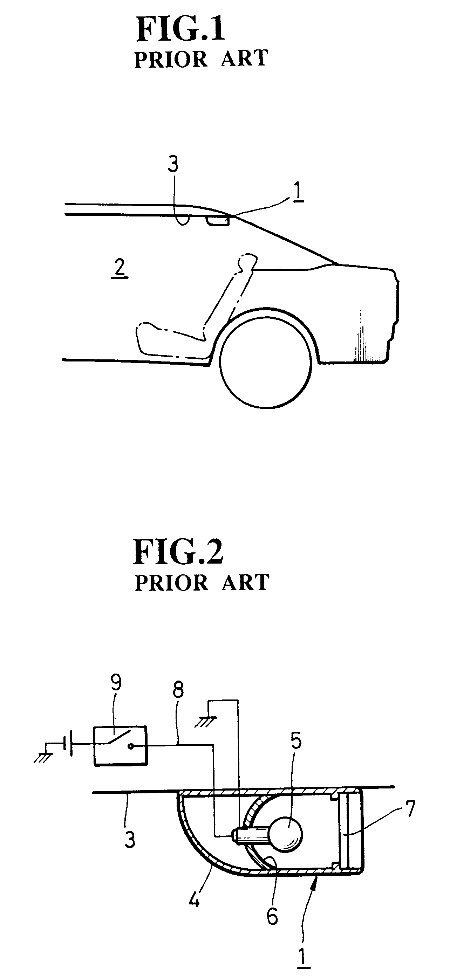

Conventionally, a vehicle stop light of high mount type, which flashes in synchronism with a brake of the vehicle, has been constructed as shown in Figs. 1 and 2 of the attached drawings.

Specifically, as shown in Fig. 1, the stop light 1 is mounted on a rear ceiling 3 of the vehicle 2. This enables the driver of a following vehicle to easily identify or confirm that the driver of the leading vehicle has operated the brake.

As shown in Fig. 2, the stop light 1 comprises a lamp 5 arranged within a casing 4, a reflector 6 for reflecting light from the lamp 5 rearward of the vehicle, and a colour filter 7 of transmission type through which the light from the reflector 6 and the lamp 5 is transmitted. The casing 4 is mounted on the rear ceiling 3 of the vehicle 2, and the lamp 5 is electrically connected to a brake switch 9 by a connection wire 8, whereby the lamp 5 flashes in synchronism with the brake switch 9.

Accordingly, the light from the lamp 5, which is turned on by depression of the brake switch 9, is directed rearward of the vehicle through the transmission type colour filter 7 which occupies the entire rear wall of the casing 4, to promote safe confirmation of brake operation by the driver of the following vehicle.

However, the above-described conventional stop light arrangement has the following disadvantages. The lamp 5 is arranged within the casing 4 which is mounted on the ceiling 3 at a rear location of the vehicle, and the transmission type colour filter 7 is mounted on a rear surface of the case 4. Accordingly, the casing 4 is relatively large. Not only does the casing 4 project downwardly from the ceiling 3 of the vehicle 2, and obstruct or interrupt the rear field of view of the driver, but also the presence of the case 4 isolates or cuts off external light such as solar light or the like, thus darkening the rear seat of the vehicle. Further, the design of an outer appearance of the vehicle is also impeded or restricted.

It is therefore an object of the invention to provide a stop light arrangement for a vehicle, which is capable of avoiding disturbance of the rear field of view of the driver and the outer appearance of the vehicle, and which also has a rear monitoring function.

According to the invention, the stop light arrangement initially defined is characterized in that: said casing is adapted to fit within the roof of the compartment; and said prism is so arranged that the road surface behind the vehicle is visible to the driver through said rear view mirror and said prism.

For a better understanding of the invention, and to show how the same may be carried into effect, reference will now be made, by way of example, to the accompanying drawings, in which:
Fig. 1 is an explanatory view of the rear section of a vehicle on which a conventional stop light is mounted;
Fig. 2 is a cross-sectional view of the conventional stop light illustrated in Fig. 1;
Fig. 3 is an explanatory view of the rear section of a vehicle on which a stop light arrangement according to one embodiment of the invention is mounted;
Fig. 4 is an explanatory cross-sectional view showing a first embodiment of the stop light for the vehicle according to the invention;
Fig. 5 is an explanatory cross-sectional view showing a second embodiment;
Fig. 6 is a schematic explanatory view showing the field of view of a rear view mirror and a prism in the vehicle comprising a stop light arrangement for the vehicle according to the invention; and
Fig. 7 is an enlarged explanatory view of the rear field of view due to the prism illustrated in Fig. 6.

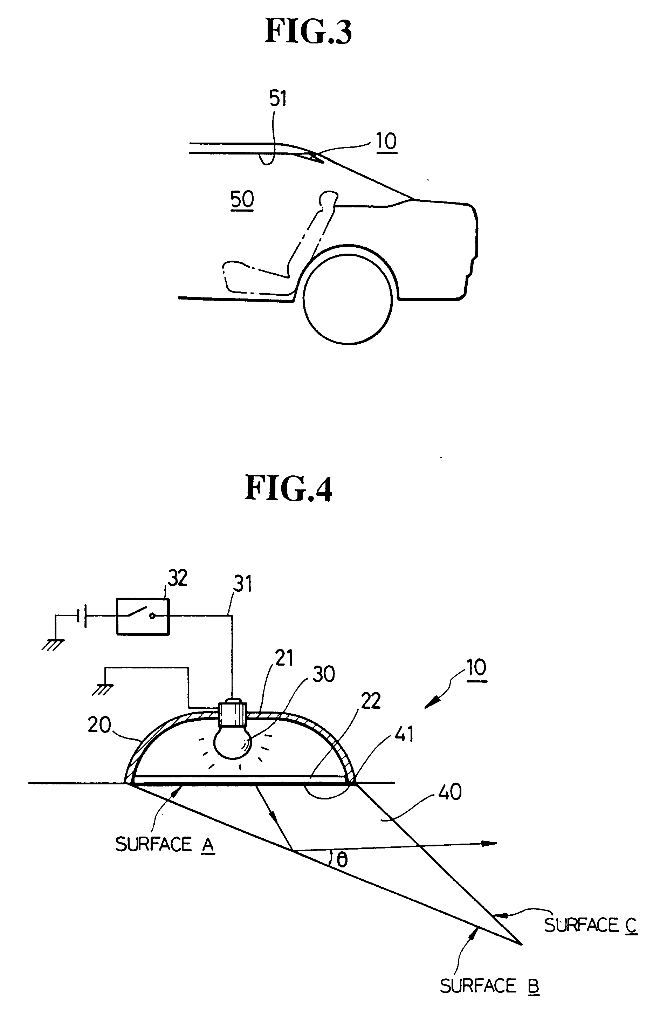

Referring first to Fig. 3, there is shown a stop light 10 for a vehicle 50, according to one embodiment of the invention. The stop light 10 is mounted on a rear ceiling 51 of the vehicle 50 and enables the driver of a following vehicle to identify or confirm that the driver for the vehicle 50 operates the brake pedal.

In the embodiment illustrated in Fig. 4, the stop light 10 for the vehicle principally comprises a casing 20, a lamp 30 arranged within the casing 20 and serving as a light source, and a prism 40 arranged at a downwardly facing opening of the casing 20 in abutment therewith.

The casing 20 has an inner surface on which a reflector 21 is mounted. A scattering plate 22 is arranged across the opening in the casing 20.

The lamp 30 is arranged within the casing 20 and is directed downwardly. The lamp 30 is connected to a brake switch 32 by a lead wire 31.

Accordingly, the lamp 30 flashes on and off in synchronism with the brake switch 32.

The prism 40 is triangular in cross-sectional configuration, and has one face which is arranged in abutment with the casing 20 adjacent to the scattering plate 22.

The prism 40 has a surface A adjacent to the scattering plate 22, and a red transparent layer (e.g. a painted layer) 41 is applied to the surface A. The angular disposition of the prism 40 is optimized such that red light (display light) incident upon and passing through the red layer 41 from the scattering plate 22 is internally reflected by a surface B of the prism 40, and the reflected light is radiated rearward of the vehicle through a surface C of the prism 40.

Accordingly, when the lamp 30 is turned on by operation of the brake switch 32, light from the lamp 30 is condensed to the scattering plate 22 by the reflector 21. The condensed scattering light is filtered to produce red light by the layer 41 of the prism 40, and is reflected by the surface B of the prism 40, and the reflected light is radiated rearward of the vehicle through the surface C of the prism 40 in a direction indicated by an arrow. This enables the driver of the following vehicle to respond to the red display at a relatively high location of the leading vehicle.

With the arrangement described above, the lamp 30 is arranged within the casing 20 and is directed downwardly. However, the light from the lamp 30 can be reflected rearward of the vehicle by the prism 40. Accordingly, it is possible to miniaturize the casing 20, and it is possible to incorporate the casing 20 at a location within the rear ceiling 51 of the vehicle 50, as shown in Fig. 3. Accordingly, the rear field of view of the driver can be considerably enlarged whilst good or superior stop light function is maintained.

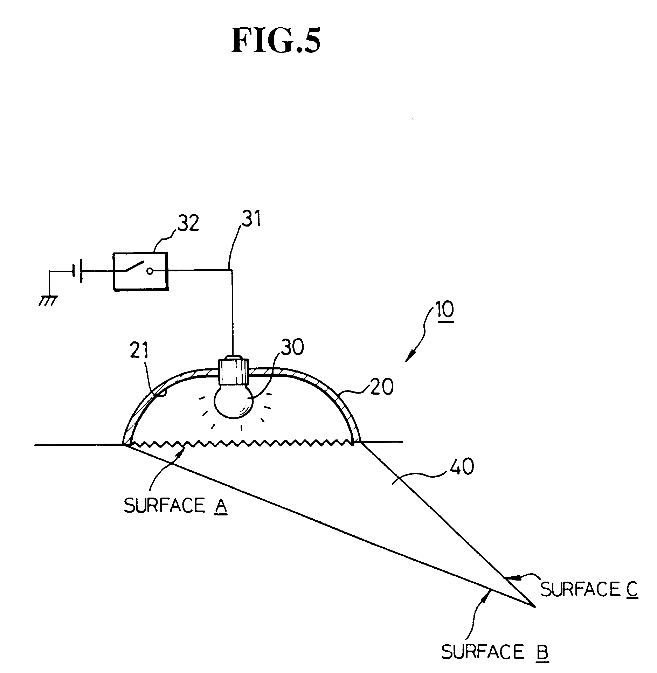

A second embodiment shown in Fig. 5 differs from the above-described first embodiment in that the configuration of the surface A of the prism 40 adjacent to the lamp 30 is shaped to scatter the light from the lamp 30, whereby the need for the scattering plate 22 is avoided.

Further, the second embodiment also differs from the first embodiment in that the lamp 30 is replaced by a red lamp, so that the red layer 41 on the surface A of the prism 40 is omitted.

Specifically, in the second embodiment, an irregular configuration (so-called "diamond cut") is formed on the surface A of the prism 40 adjacent to the lamp 30, whereby the prism 40 itself can function as a scattering plate. With this arrangement, the number of parts can be reduced. Furthermore, the positional relationship between the prism 40 and the rear view mirror at the driver seat of the vehicle 50 is optimized whereby the prism 40 can serve also as a rear monitoring mirror. With the prism 40 serving as the rear monitoring mirror, the rear field of view of the driver is further enlarged, making it possible to improve safety.

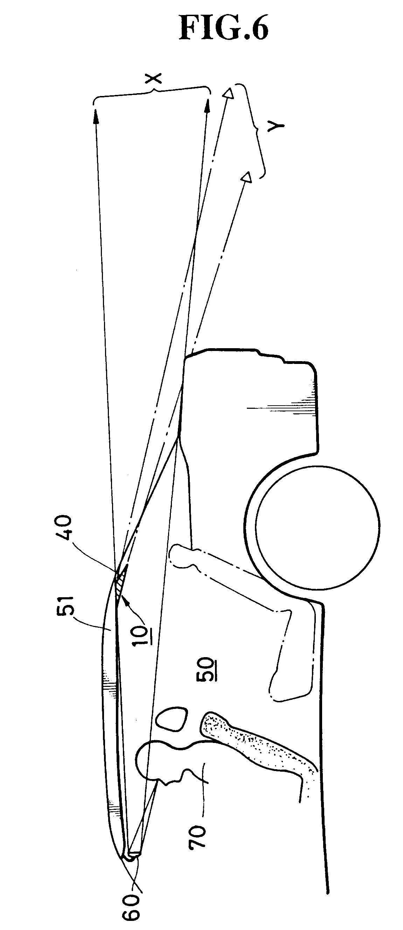

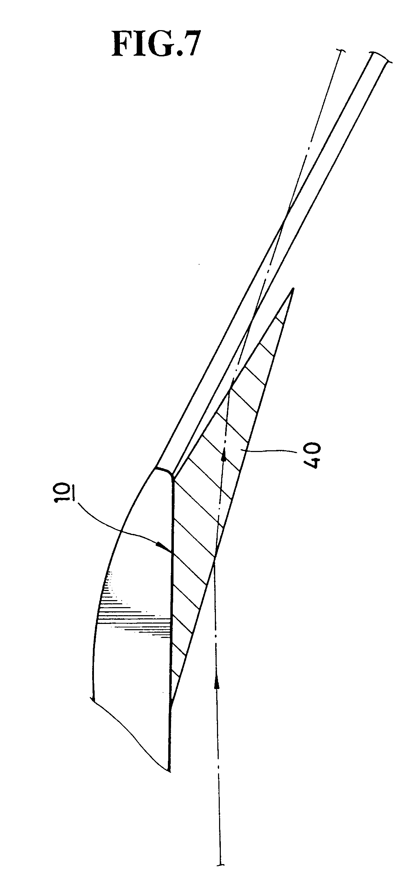

Specifically, as shown in Figs. 6 and 7, the rear view mirror 60, which is provided for the driver 70, is arranged substantially in line with the prism 40 of the stop light 10 whereby the driver 70 can observe both a normal rearward field of view X (due to the rear view mirror 60) and a rear road-surface field of view Y by observing the prism 40 by means of the rear view mirror 60. Thus, for example, it is possible to easily confirm the presence of an obstruction on the rear road-surface, and the like, through the rear view mirror 60.

The use of the prism makes it possible to reduce the casing in size and to incorporate the casing into the ceiling of the vehicle. It is possible to considerably enlarge the rear field of view of the driver, while maintaining a superior function as a stop light for the vehicle.

Further, since the prism is transparent as viewed from the outside of the vehicle, the beauty of the outer appearance and the design of the outer appearance of the vehicle are not impeded. Moreover, since the prism does not hinder or cut off the solar light, it is possible to maintain ambient light in the rear seat within the vehicle.

Furthermore, the stop light for the vehicle according to the invention serves also as a rearward monitoring mirror, because the angular disposition of the prism enables the driver to check the road surface to the rear of the vehicle through the prism from the field of view of the rear view mirror.

Accordingly, not only is it possible to enlarge the rear field of view of the driver while maintaining a function as the stop light, but also the stop light prism serves as the rear monitoring mirror. Thus, it contributes greatly to traffic safety.

## Claims

1. A stop light arrangement for a vehicle having a compartment, a rear view mirror (60), a rear window and a brake, the arrangement intended for central mounting in the vicinity of the top edge of the rear window for flashing in synchronism with the brake and the arrangement comprising:
a light source (30) arranged in a casing (20) adapted to fit within a wall of the compartment; and
a prism (40) arranged relative to said light source (30) such that light from said light source is directed rearward of the vehicle through said prism;
characterized in that: said casing (20) is adapted to fit within the roof of the compartment; and said prism (40) is so arranged that the road surface behind the vehicle is visible to the driver through said rear view mirror (60) and said prism (40).

2. A stop light arrangement according to claim 1, wherein said prism (40) is configured such that a surface thereof adjacent said light source (30) scatters light therefrom.

3. A stop light arrangement according to claim 1 or 2, wherein said light source (30) is formed by a red light source.

4. A stop light arrangement according to claim 1 or 2, wherein a red transparent material is adhered to a surface of said prism (46) adjacent said light source (30).

5. A vehicle comprising: a compartment; a rear view mirror; a rear window; a brake; and a stop light arrangement according to any preceding claim.

## Patentansprüche

1. Stoplichtanordnung für ein Fahrzeug mit einem Fahrgastraum, einem Rückspiegel (60), einem hinteren Fenster und einer Bremse, wobei die Anordnung für eine zentrale Anbringung in der Nähe der oberen Kante des hinteren Fensters vorgesehen ist, um synchron mit der Bremse aufzuleuchten, wobei die Anordnung umfaßt:
eine Lichtquelle (30), die in einem Gehäuse (20) angeordnet ist, das ausgelegt ist, um in eine Wand des Fahrgastraums zu passen; und
ein Prisma (40), welches relativ zu der Lichtquelle (30) so angeordnet ist, daß Licht von der Lichtquelle durch das Prisma hinter das Fahrzeug gerichtet wird;
dadurch gekennzeichnet, daß:
das Gehäuse (20) ausgelegt ist, so daß es in das Dach des Fahrgastraums paßt; und das Prisma (40) so angeordnet ist, daß die Straßenoberfläche hinter dem Fahrzeug für den Fahrer durch den Rückspiegel (60) und das Prisma (40) sichtbar ist.

2. Stoplichtanordnung nach Anspruch 1, dadurch gekennzeichnet, daß das Prisma (40) so konfiguriert ist, daß eine Oberfläche davon benachbart zu der Lichtquelle (30) Licht davon streut.

3. Stoplichtanordnung nach Anspruch 1 oder 2, dadurch gekennzeichnet, daß die Lichtquelle (30) durch eine rote Lichtquelle gebildet ist.

4. Stoplichtanordnung nach Anspruch 1 oder 2, dadurch gekennzeichnet, daß ein rotes transparentes Material an eine Oberfläche des Prismas (46) benachbart zu der Lichtquelle (30) angebracht ist.

5. Fahrzeug, umfassend: einen Fahrgastraum; einen Rückspiegel; ein hinteres Fenster; eine Bremse; und eine Stoplichtanordnung nach einem der vorangehenden Ansprüche.

## Revendications

1. Dispositif de feu de freinage pour un véhicule comportant un habitacle, un rétroviseur (60), une lunette arrière et un frein, le dispositif destiné à être monté en position centrale dans le voisinage du bord supérieur de la lunette arrière pour s'éclairer en synchronisme avec le frein, et le dispositif comprenant :
une source lumineuse (30) agencée dans un boitier (20) adapté pour s'ajuster dans une paroi de l'habitacle ; et
un prisme (40) disposé par rapport à ladite source lumineuse (30) de manière que la lumière issue de la source lumineuse soit dirigée vers l'arrière du véhicule à travers ce prisme,
caractérisé en ce que : ledit boitier (20) est adapté pour se loger dans le pavillon de l'habitacle ; et ledit prisme (40) est agencé de manière que la surface de la route en arrière du véhicule soit visible pour le conducteur par l'intermédiaire dudit rétroviseur (60) et dudit prisme (40).

2. Dispositif de feu de freinage selon la revendication 1, dans lequel ledit prisme (40) est configuré de manière qu'une surface de ce prisme qui est adjacent à ladite source lumineuse (30) diffuse la lumière issue de cette source.

3. Dispositif de feu de freinage selon la revendication 1 ou 2, dans lequel ladite source lumineuse (30) est formée par une source de lumière rouge.

4. Dispositif de feu de freinage selon la revendication 1 ou 2, dans lequel une matière transparente rouge est collée sur une surface dudit prisme (46) qui est adjacente à ladite source lumineuse (30).

5. Véhicule comprenant : un habitacle ; un rétroviseur ; une lunette arrière ; un frein ; et un dispositif de feu de freinage selon une quelconque des revendications, précédentes.
